# EUROPEAN PATENT APPLICATION

(11) **EP 3 035 421 A1**
(43) Date of publication of application: **22.06.2016**
(21) Application number: 15806970.8
(22) Date of filing: 10.06.2015
(51) Int. Cl.: H01M 4/52, H01M 4/62

(54) **MANUFACTURING METHOD FOR CARBON-COATED NANO-FERROFERRIC OXIDE FOR BATTERY**

(30) Priority: 11.06.2014 CN 201410259436
(71) Applicant: Foshan Nanhai Sanik Battery Co., Ltd, Foshan, Guangdong 528216 (CN)
(72) Inventor: YAN, Dengming, Foshan Guangdong 528216 (CN); YU, Haisheng, Foshan Guangdong 528216 (CN); CHEN, Weiming, Foshan Guangdong 528216 (CN)
(74) Representative: Sun, Yiming
(86) International application number: PCT/CN2015/081123
(87) International publication number: WO 2015/188744

(57) **Abstract**

The present invention provides a method for manufacturing a carbon-coated nanometer Fe₃O₄ for a cathode of a battery. The manufacturing method includes the following steps: dry mixing Fe₃O₄ and high-purity conductive carbon black, adding the dry-mixed Fe₃O₄ powder and conductive carbon black into a prepared NaOH solution, adding a prepared NaBH₄ solution into the reaction solution, and conducting aging, pure water cleaning, ultrasonic dispersing, filtering, drying, screening, and seal packing. An iron nickel battery which is produced using the manufacturing method for carbon-coated nanometer Fe₃O₄ for an electrode of a battery provided in the present invention has high capacity per gram, high charging and discharging efficiency and low self-discharging, is capable of being sealed, and has a simple process, high strength and long life.

## Description

### BACKGROUND OF THE INVENTION

### Technical Field

The present invention relates to the technical field of materials for manufacturing batteries, and in particular, to a method for manufacturing carbon-coated nanometer Fe₃O₄ for a cathode of a battery.

### Related Art

An iron-nickel storage battery is one type among many rechargeable batteries. A cathode of the iron-nickel storage battery is nickel oxide, an anode of the iron-nickel storage battery is iron, and an electrolyte (an electrolytic solution) is KOH. A voltage of an iron nickel battery generally is 1.2 V, and the battery is very durable, can endure accidents during use at a certain degree (for example, excessive charging, excessive discharging, short circuit, and overheating), and can last for a very long time after going through the foregoing damages.

Researches and applications of an iron cathode and a nickel anode have been conducted for more than 100 years. In 1887, Desmazures et al., discussed possibilities of using nickel oxide as an active substance at an anode in an alkaline battery. In 1895, Junger from Sweden invented a cadmium-nickel storage battery. In 1900, Edison from America developed an iron-nickel storage battery, and since 1901, Junger and Edison had collaborated on several patents in respect of cadmium-nickel and iron-nickel batteries.

The iron nickel batteries have good prospects in applications in respect of transport force. In America, Soviet Union, Sweden, West Germany, and Japan, the iron nickel batteries have been commercially developed in various application fields. In the 1980s and 1990s, Karaikudi Central Electrochemical Research Institute (India) and Indian Academy of Sciences Solid Structural Chemistry Department conducted a great amount of work on the iron nickel battery system. Since the late 1990s, many scholars in China and other countries have conducted researches in multiple aspects, so that the iron nickel batteries are put back on the path for practical use.

At present, the capacity per gram of general Fe₃O₄ for use in production of iron electrodes is only 50-100 mAh, and the iron nickel battery that is produced by using the general Fe₃O₄ has low charging and discharging efficiency and high self-discharging, is incapable of discharging at a high rate or being sealed, and has a complicated production process, which limit the use and development of the iron nickel battery.

### SUMMARY

To overcome disadvantages of general Fe₃O₄ for an iron electrode of an existing battery, including low capacity per gram, low charging and discharging efficiency, high self-discharging, and a complicated manufacturing process, and being incapable of discharging at a high rate or being sealed, Fe₃O₄ for an iron electrode of a battery that has high capacity per gram, high charging and discharging efficiency, high rate of discharging, low self-discharging, is capable of being sealed, and has a simple process, low cost, high intensity, and long life time, and a manufacturing method therefor are needed.

The present invention provides a method for manufacturing carbon-coated nanometer Fe₃O₄ for a cathode of a battery. FIG. (1) is a process flow diagram of the present invention. As shown in FIG. (1), the manufacturing method includes the following steps:
(1) crushing and screening Fe₃O₄ at 300 to 400 meshes and dry mixing the Fe₃O₄ and high-purity conductive carbon black having a particle diameter of 0.1 to 0.3 µm in a ratio of 70-90 : 30-10 at a rotation speed of 500 to 1000 rounds per minute for 0.5 to 1 hour;
(2) placing and maintaining an NaOH solution having a concentration of 0.05 M to 3 M prepared using pure water at a constant temperature of 5 to 15°C for 0.5 to 1 hour;
(3) adding the dry-mixed Fe₃O₄ powder and conductive carbon black into the prepared NaOH solution at a temperature of 5 to 15°C, over slow and uniform stirring, and continuously stirring for 0.5 to 1.5 hours after the dry mixed materials are added into the solution;
(4) providing a direct-current voltage of 1 to 3 V and a direct-current current of 10 to 30 mA to a reaction vessel by using a direct-current constant current source, preparing pure water into an NaBH₄ solution having a concentration of 0.05 M to 3 M and slowly adding the solution into the reaction solution at a flow rate of 3 to 6 mL per minute, at 5 to 15 °C, over slow and uniform stirring, where after the NaBH₄ solution is added into the reaction solution, a weight percentage of the components in the mixed solution in the whole vessel is within the following proportion range: Fe₃O₄ : conductive carbon black : NaOH : NaBH₄ : pure water = 6.45-8.86 : 0.645-0.886 : 2.15-2.95 : 1.07-1.48 : 85.8-89.68, and continuously stirring over electrifying for 2 to 3 hours;
(5) conducting aging at a temperature of -1 to 0°C for 10 to 24 hours after the reaction;
(6) cleaning by using pure water until a pH value is 6 to 9;
(7) ultrasonic dispersing for 1 to 3 hours;
(8) filtering;
(9) drying at 90 to 100°C;
(10) screening at 300 to 400 meshes; and
(11) seal packing for use.

An iron nickel battery that is produced by using the carbon-coated nanometer Fe₃O₄ for an electrode of a battery provided in the present invention has excellent performance in 1C charging and discharging, 5C charging and discharging, 10C charging and discharging, 20C charging and discharging, and 30C charging and discharging, has a super-high rate of charging and discharging performance, a capacity per gram high to 400 mAh or above, and a stable cycle life with a 1 C charging and discharging cycle life high to 300 cycles or above. The iron nickel battery that is produced by using the carbon-coated nanometer Fe₃O₄ provided in the present invention has advantages of having fine electrical properties and long life time, and being green, environmentally friendly, and safe, which is particularly suitable for use in the field of electric automobiles.

### BRIEF DESCRIPTION OF THE DRAWINGS

To describe the technical solutions of the embodiments of the present invention more clearly, the following briefly introduces the accompanying drawings required for describing the embodiments. Apparently, the accompanying drawings in the following description show only some embodiments of the present invention, and a person of ordinary skill in the art may still derive other drawings from these accompanying drawings without creative efforts.

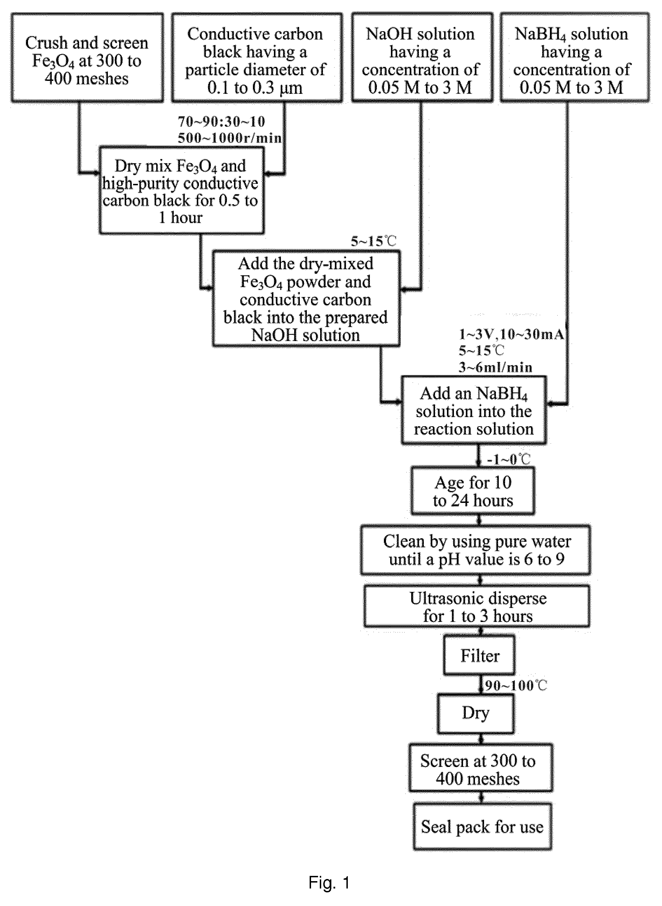

FIG. 1 is a process flow diagram of the present invention;
FIG. 2 is a an XRD graph for untreated Fe₃O₄ and carbon-coated nanometer Fe₃O₄ obtained in Embodiment 2;
FIG. 3 is an SEM image for untreated Fe₃O₄;
FIG. 4 is an SEM image for carbon-coated nanometer Fe₃O₄;
FIG. 5 is a curve graph of a cycle life test on an AA600mAh sealed iron nickel battery that is manufactured by using untreated Fe₃O₄; and
FIG. 6 is a curve graph of a cycle life test on an AA600mAh sealed iron nickel battery that is manufactured by using carbon-coated nanometer Fe₃O₄.

### DETAILED DESCRIPTION

The following clearly and completely describes the technical solutions according to the embodiments of the present invention with reference to the accompanying drawings in the embodiments of the present invention. Apparently, the embodiments in the following description are merely a part rather than all of the embodiments of the present invention. All other embodiments obtained by a person of ordinary skill in the art based on the embodiments of the present invention without creative efforts shall fall within the protection scope of the present invention.

### Embodiment 1

A preferable implementation manner of the present invention provides a specific method for manufacturing carbon-coated nanometer Fe₃O₄ for a cathode of a battery. The specific manufacturing method includes the following steps:
(1) accurately weighing 20 g of NaOH, dissolving the NaOH in 500 mL of pure water, and after the dissolving is completed, cooling the solution to room temperature for use; and then placing and maintaining the NaOH solution at a constant temperature of 10°C for 30 minutes;
(2) accurately weighing 60 g of Fe₃O₄ powder, crushing and screening the Fe₃O₄ at 400 meshes, and dry mixing the Fe₃O₄ and accurately-weighed 6 g of high-purity conductive carbon black having a particle diameter of 0.1 to 0.3 µm, at a rotation speed of 500 to 1000 rounds per minute, for 30 minutes;
(3) adding the dry-mixed Fe₃O₄ powder and conductive carbon black into the prepared NaOH solution at an environment temperature of 10°C, at the rotation speed of 500 to 1000 rounds per minute, and continuously stirring for 30 minutes after the dry-mixed materials are added into the solution;
(4) accurately weighing 10 g of NaBH₄ and dissolving the NaBH₄ in 250 mL of pure water;
(5) providing a direct-current voltage of 1.1 V and a direct-current current of 30 mA to a reaction vessel, slowly adding the prepared NaBH₄ solution into the reaction solution at a temperature of 5 to 15°C, over slow and uniform stirring, at a flow rate of 5 mL per minute, and after the NaBH₄ solution is added into the reaction solution, continuously electrifying and stirring for 3 hours;
(6) aging for 10 hours at night in ice water;
(7) cleaning by using pure water at 80°C until a pH value is 7 to 8;
(8) ultrasonic dispersing for 1 hour;
(9) filtering;
(10) drying at the temperature of 85°C;
(11) screening at 300 meshes; and
(12) seal packing for use.

### Embodiment 2

(1) accurately weighing 2 g of NaOH, dissolving the NaOH in 500 mL of pure water, and after the dissolving is completed, cooling the solution to room temperature for use; and then placing and maintaining the NaOH solution at a constant temperature of 5°C for 30 minutes;
(2) accurately weighing 48 g of Fe₃O₄ powder, crushing and screening the Fe₃O₄ at 400 meshes, and dry mixing the Fe₃O₄ and accurately-weighed 12 g of high-purity conductive carbon black having a particle diameter of 0.3 µm, at a rotation speed of 500 to 1000 rounds per minute, for 60 minutes;
(3) adding the dry-mixed Fe₃O₄ powder and conductive carbon black into the prepared NaOH solution at an environment temperature of 5°C, at the rotation speed of 800 rounds per minute, and continuously stirring for 1.5 hours after the dry-mixed materials are added into the solution;
(4) accurately weighing 0.5 g of NaBH₄ and dissolving the NaBH₄ in 250 mL of pure water;
(5) providing a direct-current voltage of 2 V and a direct-current current of 10 mA to a reaction vessel, slowly adding the prepared NaBH₄ solution into the reaction solution at a temperature of 10°C, over slow and uniform stirring, at a flow rate of 6 mL per minute, and after the NaBH₄ solution is added into the reaction solution, continuously electrifying and stirring for 2.5 hours;
(6) aging for 12 hours at night in ice water;
(7) cleaning by using pure water at 80°C until a pH value is 9;
(8) ultrasonic dispersing for 2 hours;
(9) filtering;
(10) drying at the temperature of 90°C;
(11) screening at 300 meshes; and
(12) seal packing for use.

### Embodiment 3

(1) accurately weighing 60 g of NaOH, dissolving the NaOH in 500 mL of pure water, and after the dissolving is completed, cooling the solution to room temperature for use; and then placing and maintaining the NaOH solution at a constant temperature of 15°C for 1 hour;
(2) accurately weighing 70 g of Fe₃O₄ powder, crushing and screening the Fe₃O₄ at 300 meshes, and dry mixing the Fe₃O₄ and accurately-weighed 6 g of high-purity conductive carbon black having a particle diameter of 0.1 µm, at a rotation speed of 500 rounds per minute, for 30 minutes;
(3) adding the dry-mixed Fe₃O₄ powder and conductive carbon black into the prepared NaOH solution at an environment temperature of 15°C, at the rotation speed of 1000 rounds per minute, and continuously stirring for 1 hour after the dry-mixed materials are added into the solution;
(4) accurately weighing 27.5 g of NaBH₄ and dissolving the NaBH₄ in 250 mL of pure water;
(5) providing a direct-current voltage of 3 V and a direct-current current of 30 mA to a reaction vessel, slowly adding the prepared NaBH₄ solution into the reaction solution at a temperature of 15°C, over slow and uniform stirring, at a flow rate of 3 mL per minute, and after the NaBH₄ solution is added into the reaction solution, continuously electrifying and stirring for 2 hours;
(6) aging for 24 hours at night in ice water;
(7) cleaning by using pure water at 80°C until a pH value is 6;
(8) ultrasonic dispersing for 3 hours;
(9) filtering;
(10) drying at the temperature of 100°C;
(11) screening at 400 meshes; and
(12) seal packing for use.

### Embodiment 4

XRD graph and SEM image contrast analyses for untreated Fe₃O₄ and carbon-coated nanometer Fe₃O₄ obtained in Embodiment 2 are performed. The untreated Fe₃O₄ is Sample 0^{#}, and a sample obtained in Embodiment 2 is Sample 3^{#}.

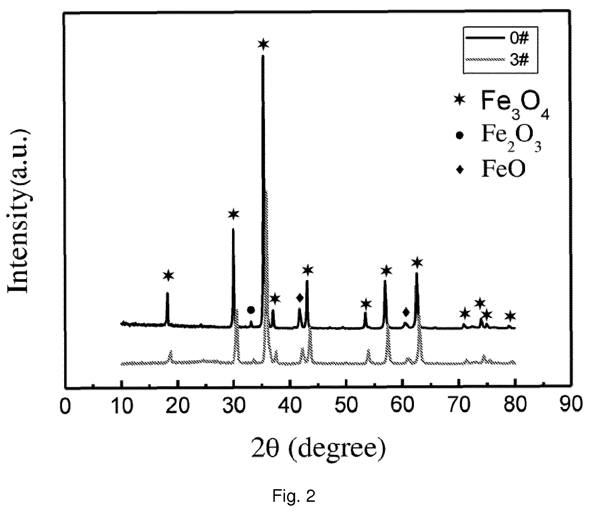

FIG. 2 shows an XRD graph for Sample 0^{#} and Sample 3^{#}. Upon analysis, major components of Sample 0^{#} and Sample 3^{#} are both Fe₃O₄, mixed with impure phases Fe₂O₃ and FeO. XRD peaks of Sample 0^{#} are comparatively sharp, and peaks of Sample 3^{#} are comparatively not quite sharp, which indicates that this XRD graph for Sample 3^{#} is caused by that Fe₃O₄ is coated by carbon, and a peak that is comparatively not obvious occurs for Sample 3^{#} when 2θ = 26°.

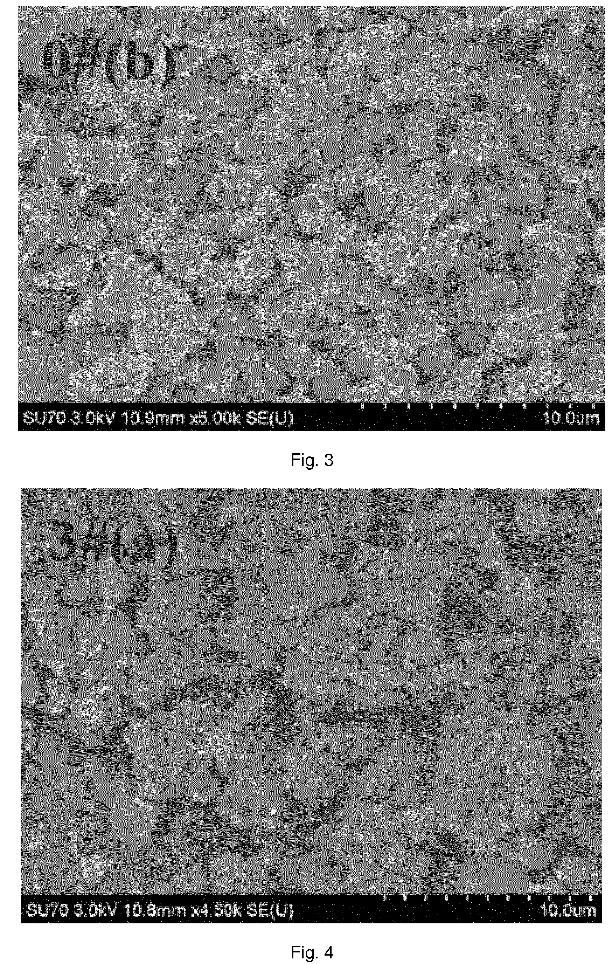

FIG. 3 is an SEM image for Sample 0^{#}. FIG. 4 is a SEM image of Sample 3^{#}. As can be obviously seen from the SEM image, phase particles of Sample 0^{#} are comparatively simplex, and majorly include micron-size blocks; and Sample 3^{#} is composed of two types of phase particles, and micron-size blocks are coated by granules in clusters and having a size of about 50 to 60 nm.

### Embodiment 5

Fe₃O₄ that is not coated by carbon and Fe₃O₄ that is coated by carbon by using the process of the present invention are separately manufactured into AA600mAh sealed iron nickel batteries, and relevant performance data of the batteries are tested for comparison. The AA600mAh sealed iron nickel battery manufactured by using the Fe₃O₄ that is not coated by carbon is indicated in the "Before coating" item and the AA600mAh sealed iron nickel battery manufactured by using the Fe₃O₄ that is coated by carbon by using the process of the present invention is indicated in the "After coating" item.

**1. Test data:**

| | **Before coating** | **After coating** |
|---|---|---|
| **Net iron powder quantity of pole piece (g)** | **3.0** | **2.7** |
| **Closed circuit voltage (V)** | **1.489** | **1.400** |
| **Internal resistance (mΩ)** | | **15.7** |
| **0.5 C capacity per gram (mAh/g)** | **76.67** | **233.33** |
| **0.5 C Capacity (mAh)** | **230** | **630** |
| **0.5 C cycle life (cycles)** | **80 (64% residue)** | **80 (90% residue)** |

**0.5 C Capacity data:**

| | | | | | | | | | | | |
|---|---|---|---|---|---|---|---|---|---|---|---|
| | 0.5 C Capacity | | | | | | | | | | |
| | n^{th} position | Cycles | Working state | Set current | Set voltage | Start voltage | Terminate voltage | Mean voltage | Terminate capacity | Terminate time | Terminate current |
| | 1 | 1 | Constant - current charging | 300.00 | 1.900 | 1.225 | 1.624 | 1.637 | 719.983 | 144.00 | 300.00 |
| Before coating | | | Constant - current discharging | 300.00 | 0.800 | 1.484 | 0.799 | 0.979 | 145.327 | 29.07 | 300.00 |
| | 2 | | Constant - current charging | 300.00 | 1.900 | 1.075 | 1.624 | 1.644 | 719.983 | 144.00 | 300.00 |
| | | | Constant - current discharging | 300.00 | 0.800 | 1.489 | 0.799 | 0.950 | 230.660 | 46.13 | 300.00 |
| After coating | n^{th} position | Cycles | Working state | Set current | Set voltage | Start voltage | Terminate voltage | Mean voltage | Terminate capacity | Terminate time | Terminate current |
| | 1 | 1 | Constant - current discharging | 300.00 | 0.800 | 1.378 | 0.799 | 0.973 | 624.033 | 124.80 | 300.00 |
| | | | Constant - current charging | 300.00 | 1.900 | 0.994 | 1.682 | 1.428 | 720.033 | 144.00 | 300.00 |
| | 2 | | Constant - current discharging | 300.00 | 0.800 | 1.401 | 0.798 | 0.990 | 631.367 | 126.27 | 300.00 |
| | | | Constant - current charging | 300.00 | 1.900 | 0.889 | 1.678 | 1.421 | 720.033 | 144.00 | 300.00 |

As can be seen from the above test data, the use amount of net iron powder quantity of pole piece after the coating is less than the use amount of net iron powder quantity of pole piece before coating, the capacity per gram is 76.67 mAh/g before coating and is 233.33 mAh/g after coating, and the capacity per gram of the battery sample after coating is 3.04 times of the capacity per gram of the battery sample before coating; the constant-current discharging terminate capacities of the battery samples before coating are 145.327 mAh and 230.660 mAh, respectively, and the constant-current discharging terminate capacities of the battery samples after coating are 624.033 mAh and 631.367 mAh, respectively, and the capacity of the AA600mAh sealed iron nickel battery manufactured by using the Fe₃O₄ that is coated by carbon by using the process of the present invention is 2.7 to 4.34 times of the capacity of the AA600mAh sealed iron nickel battery manufactured by using the Fe₃O₄ that is not coated by carbon. After circular charging and discharging for 80 times, the capacity of the battery before coating only has 64% remained, and the capacity of the battery after coating has 90% remained.

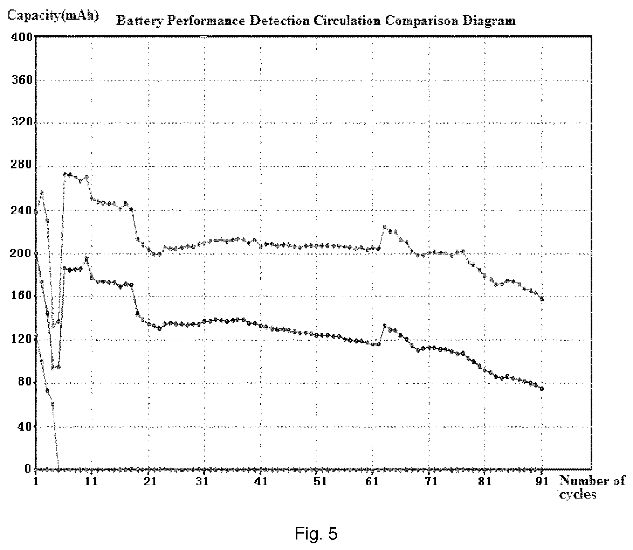

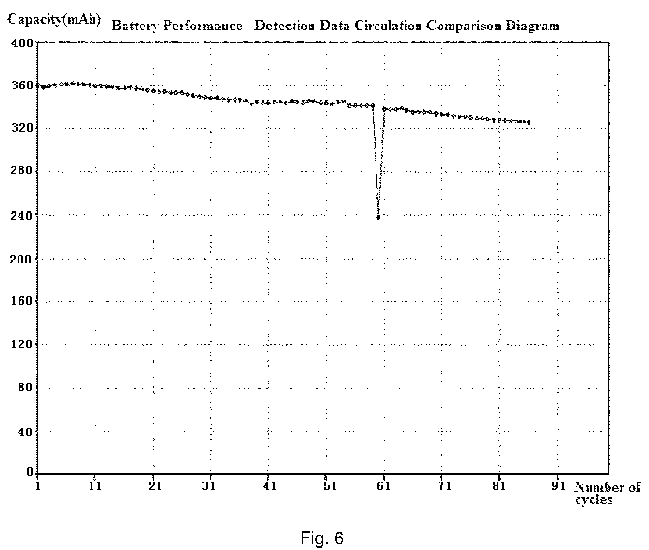

Referring to FIG. 5 and FIG. 6, FIG. 5 is a curve graph for a change in the capacity of the AA600mAh sealed iron nickel battery manufactured by using the Fe₃O₄ that is not coated by carbon along with an increase of the number of cycles, and FIG. 6 is a curve graph for a change in the capacity of the AA600mAh sealed iron nickel battery manufactured by using the Fe₃O₄ that is coated by carbon by using the process of the present invention along with an increase of the number of cycles. As can be seen from the cycle life test curves, the change in the capacity of the AA600mAh sealed iron nickel battery manufactured by using the Fe₃O₄ that is not coated by carbon along with an increase of the number of cycles is rather unstable, and the change in the capacity of the AA600mAh sealed iron nickel battery manufactured by using the Fe₃O₄ that is coated by carbon by using the process of the present invention along with an increase of the number of cycles is quite stable.

The foregoing preferable embodiments of the present invention are only for specifically explaining and describing the content of the present invention, but are not intended to limit the protection scope of the present invention.

## Claims

1. A method for manufacturing carbon-coated nanometer Fe₃O₄ for a cathode of a battery, wherein the manufacturing method comprises the following steps:
(1) crushing and screening Fe₃O₄ at 300 to 400 meshes and dry mixing the Fe₃O₄ and high-purity conductive carbon black having a particle diameter of 0.1 to 0.3 µm for 0.5 to 1 hour;
(2) preparing an NaOH solution having a concentration of 0.05 M to 3 M using pure water;
(3) adding the dry-mixed Fe₃O₄ powder and conductive carbon black into the prepared NaOH solution, and continuously stirring for 0.5 to 1.5 hours after the dry-mixed materials are added into the solution;
(4) slowly adding an NaBH₄ solution having a concentration of 0.05 M to 3 M that is prepared using pure water into the reaction solution obtained in step (3), wherein after the NaBH₄ solution is added into the reaction solution, a weight ratio of the components in the mixed solution in the whole vessel is within the following proportion range: Fe₃O₄ : conductive carbon black : NaOH : NaBH₄ : pure water = 6.45-8.86 : 0.645-0.886 : 2.15-2.95 : 1.07-1.48 : 85.8-89.68, and continuously electrifying and stirring for 2 to 3 hours;
(5) aging the reaction solution after the reaction;
(6) cleaning with pure water;
(7) ultrasonic dispersing;
(8) filtering;
(9) drying;
(10) screening at 300 to 400 meshes; and
(11) seal packing for use.

2. The method for manufacturing carbon-coated nanometer Fe₃O₄ for a cathode of a battery according to claim 1, wherein: in step (1), the Fe₃O₄ and the carbon black are dry mixed in a ratio of 70-90 : 30-10 at a rotation speed of 500 to 1000 rounds per minute.

3. The method for manufacturing carbon-coated nanometer Fe₃O₄ for a cathode of a battery according to claim 1, wherein: in the step (2), the NaOH solution is placed and maintained at a constant temperature of 5 to 15°C for 0.5 to 1 hour.

4. The method for manufacturing carbon-coated nanometer Fe₃O₄ for a cathode of a battery according to claim 1, wherein: in step (3), the adding the dry-mixed Fe₃O₄ powder and conductive carbon black into the prepared NaOH solution is completed at 5 to 15°C over slow and uniform stirring.

5. The method for manufacturing carbon-coated nanometer Fe₃O₄ for a cathode of a battery according to claim 1, wherein: in step (4), the adding an NaBH₄ solution into the reaction solution is completed at a flow rate of 3 to 6 mL per minute in conditions of providing a direct-current voltage of 1 to 3 V and a direct-current current of 10 to 30 mA to a reaction vessel by using a direct-current constant current source, at 5 to 15°C, over slow and uniform stirring.

6. The method for manufacturing carbon-coated nanometer Fe₃O₄ for a cathode of a battery according to claim 1, wherein: in step (5), the aging is completed at -1 to 0°C, and the aging lasts for 10 to 24 hours.

7. The method for manufacturing carbon-coated nanometer Fe₃O₄ for a cathode of a battery according to claim 1, wherein: in step (6), the cleaning is performed until a pH value of the solution is 6 to 9.

8. The method for manufacturing carbon-coated nanometer Fe₃O₄ for a cathode of a battery according to claim 1, wherein: in step (7), a period of time for the ultrasonic dispersion is 1 to 3 hours.

9. The method for manufacturing carbon-coated nanometer Fe₃O₄ for a cathode of a battery according to claim 1, wherein: in step (9), the drying is performed at 90 to 100°C.
